# EUROPEAN PATENT SPECIFICATION

(11) **EP 2 648 449 B1**
(45) Date of publication and mention of the grant of the patent: **16.10.2019**
(21) Application number: 12164895.0
(22) Date of filing: 20.04.2012
(51) Int. Cl.: H04W 36/00, H04L 9/06, H04L 9/12, H04W 12/02

(54) **Cell reselection in telecommunications system**
Zellenneuauswahl in Telekommunikationssystemen
Resélection de cellules dans un système de télécommunication

(30) Priority: 05.04.2012 FI 20125390
(43) Date of publication of application: 09.10.2013
(73) Proprietor: Airbus Defence and Space Oy, 00380 Helsinki (FI)
(72) Inventor: Kauhanen, Lari-Mikko, 00380 Helsinki (FI); Kilpeläinen, Janne, 00380 Helsinki (FI); Riekkinen, Hannu, 00380 Helsinki (FI)
(74) Representative: Kolster Oy Ab

(56) References cited:
- EP-A2- 1 437 910
- WO-A1-2006/084952
- WO-A2-2006/063310
- GB-A- 2 362 783
- US-A- 5 243 653

## Description

### FIELD

The present invention relates to a cell reselection procedure in a telecommunications system, and especially to a cell reselection procedure when encryption synchronisation is used.

### BACKGROUND ART

The following description of background art may include insights, discoveries, understandings or disclosures, or associations together with disclosures not known to the relevant prior art to the present invention but provided by the invention. Some such contributions of the invention may be specifically pointed out below, whereas other such contributions of the invention will be apparent from their context.

One of key features of wireless telecommunications systems is to support movability of a user using a mobile apparatus. Typically, in a wireless telecommunications system, a geographical region is divided into a number of cells, each being served by a base station and overlapping at least with its neighbouring cells. The mobile apparatus establishes a communication link to the base station of the cell within which the mobile apparatus locates. As a mobile apparatus moves, it may move from the coverage area of one base station to the coverage area of another (new) base station, i.e. from one cell to another and within the overlapping coverage areas of the mobile apparatus changes to be supported by the new base station. As the remote unit moves further into the new cell, it continues to be supported by the new base station. This is known as cell reselection or handover.

To secure user data exchange, the sent data may be encrypted before sending and after reception the data may be decrypted. One common way to take care of this encryption and decryption is to use an encryption and decryption mechanism wherein an encryption function of a transmitting apparatus generates encrypted data that is communicated to a receiving apparatus where the inverse operation is performed to regenerate the original data. The encryption and decryption functions are based on key streams generated by a key stream generator at the transmitting apparatus and receiving apparatus, respectively. Hence, the communications may be called stream-encrypted communications. In order to have successful decoding, the key stream of the receiving apparatus is synchronised with the key stream of the transmitting apparatus by the transmitting apparatus sending synchronisation information. Only, if the key streams are synchronised, the receiving apparatus is able to decrypt the received stream-encrypted data. In other words, when the encryption synchronisation is lost, stream-encrypted_data, such as speech, cannot be properly decrypted by the receiving apparatus, and the outcome is random data.

When a cell reselection takes place, the encryption synchronisation is lost until the receiving mobile apparatus receives encryption synchronisation information over the new cell. The receiving mobile apparatus which has performed the cell reselection is aware that encryption synchronisation may have been lost and may accordingly proceed to mute the call to avoid that noise is output to the user. However, the transmitting party which has not performed the cell reselection has no information that the receiving party outputs noise or is mute, and will continue to output stream-encrypted data the receiving apparatus cannot properly decrypt. For example, for a voice call this will result in a noise output rather than the desired speech or other data, and part of the information may be lost. A problem caused by the cell reselection process is that the process itself takes some time, and after that a further time is required until the mobile apparatus receives encryption synchronisation information, performs encryption resynchronisation and is able to decrypt the received user data properly, and during the mute time or noise time some important user data may be missed. This is especially problematic in telecommunications relating to public safety: losing part of an address, for example, may be fatal, but on the other hand, encryption of transmitted data is invaluable. Hence, the mute time should be minimised.

US 5243653 discloses a solution in which fixed communication units and portable communication units each comprise an encryption synchronisation counter and during a hand-off initiation of a portable communication unit a continuation value for an encryption synchronisation counter in a target fixed communication unit is loaded and the continuation value is incremented synchronously in the encryption synchronisation counter in the target fixed communication unit and in an encryption synchronisation counter in the portable communication unit, starting from the continuation value and beginning at the time of hand-off completion.

EP 1437910 discloses a solution in which a controller in a communication system generates, during a handover of a mobile station, both circuit mode voice or data and additional synchronization data constituting user-plane information, and forwards both of them to one or more base stations, a base station then deciding which one of the circuit mode voice or data and the additional synchronization data is transmitted over the air to the mobile station.

GB 236783 discloses a solution how to overcome signal delays in system in which data is sent in frames.

### SUMMARY

An object of the present invention is thus to provide a method and an apparatus for implementing the method so as to provide a mechanism to minimize the mute/noise time caused by a cell reselection when stream-encrypted communications is used. The object of the invention is achieved by methods, an apparatus, a computer program product and a system which are characterized by what is stated in the independent claims. The preferred embodiments of the invention are disclosed in the dependent claims.

The invention is based on the idea of combining/synchronising the cell reselection procedure and the encryption synchronisation procedure. The combining/synchronising enables to minimize the time needed for both procedures, and hence the mute/noise time may be optimised and shortened.

An aspect provides a mechanism to optimise a waiting time for synchronisation information by synchronising the starting time of the cell reselection procedure with a predicted time for receiving encryption synchronisation information.

Another aspect provides an interactive synchronisation mechanism in which the time is minimised by triggering a request for encryption synchronisation information almost immediately after the cell reselection is performed.

### BRIEF DESCRIPTION OF THE DRAWINGS

In the following, exemplary embodiments will be described in greater detail with reference to accompanying drawings, in which
Figure 1 shows simplified architecture of a system and block diagrams of apparatuses according to an embodiment;
Figures 2 to 7 are flow charts illustrating different examples relating to combining encryption synchronisation and cell reselection; and
Figures 8 and 9 relates to examples relating to triggering of cell reselection.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any wireless apparatus, access point node, controlling node and/or corresponding component that support cell reselection and encryption synchronisation in a communication system. The communication system may be a wireless communication system or a communication system utilizing both fixed networks and wireless networks. The protocols used, the specifications of communication systems, access point nodes, controlling nodes and wireless apparatuses develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on a Terrestrial Trunked Radio Access (TETRA) system, without restricting the embodiments to such a solution. Other examples of systems in which encryption synchronisation information is sent separately from the actual user data include TETRAPOL, DMR (digital mobile radio) systems, Project 25 (P25) mobile radio systems, 3G (third generation) mobile communications systems, and 4G (fourth generation) mobile communications systems.

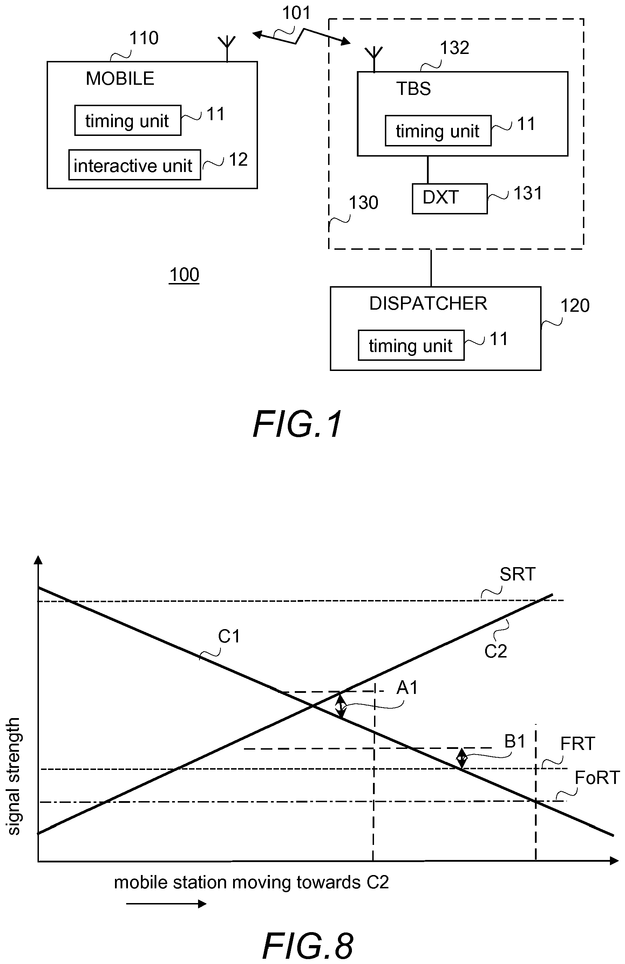

A general architecture of a communication system according to an embodiment based on TETRA is illustrated in Figure 1. Figure 1 is a simplified system architecture only showing some apparatuses and functional entities, all being logical units whose implementation may differ from what is shown. The connections shown in Figure 1 are logical connections; the actual physical connections may be different. It is apparent to a person skilled in the art that the systems also comprise other functions and structures used in or for communication in TETRA, especially for stream-encrypted data. They, as well as the protocols, encryption algorithms, key stream generations and key management used, are well known by persons skilled in the art and are irrelevant to the actual invention. Therefore, they need not to be discussed in more detail here.

In the example illustrated in Figure 1, the TETRA radio system 100 comprises different types of TETRA user apparatuses, a mobile radio apparatus 110 connectable over air link 101 to a switching and management infrastructure (SwMI) 130 and a dispatcher workstation 120.

The mobile radio apparatus 110 may be a handheld radio apparatus, or a so called fixed radio apparatus in a vehicle, for example. The mobile radio apparatus 110 is an apparatus providing secure voice and/or data communications for users over the air, either over the link 101 or in a direct mode communication in which TETRA radio user apparatuses communicate directly with each other without using SwMI. The dispatching workstation 120 illustrates a dispatching system communicating in this example with SwMI over a fixed connection. The dispatching workstation 120 can communicate with the other user apparatuses, and/or manage system, subscriber, group and/or organisation-specific parameters of the radio system.

SwMI 130 is equipment for a voice plus data (V+D) network, which enables the TETRA user apparatuses to communicate with each other. In Figure 1, SwMI 130 comprises two network apparatuses: a digital exchange (DXT) 131 for taking care of switching within a network and to/from other networks, and a base station (TBS) 132. The base station 132 is for uplink (from mobile user apparatuses to the base station) and downlink (from the base station to mobile user apparatus(es)) over the air communication. The downlink communication is normally a continuous transmission comprising specific communications with mobile user apparatus(es), synchronisation or other general broadcasts.

Each of the illustrated apparatuses, or any corresponding apparatus, is a computing device that comprises not only prior art means, but may also comprise means for implementing optimised timing functionality and/or at least one of the receiving and transmitting interactive synchronization functionality described below. Such an apparatus may comprise separate means for each separate function, or means may be configured to perform two or more functions, and even to combine functions of different embodiments/examples. These means may be implemented by various techniques. For example, the means may be implemented in hardware (one or more apparatuses), firmware (one or more apparatuses), software (one or more modules), or combinations thereof. For a firmware or software, implementation can be through units/modules (e.g. procedures, functions, and so on) that perform the functions described herein. In other words, an apparatus may be configured to perform one or more of optimised timing functionality and/or interactive synchronization functionality described below with an embodiment, and it may be configured to perform functionalities from different embodiments/examples.

In the example of Figure 1, the mobile user apparatus 110 is configured to provide both the optimised timing functionality and the interactive synchronisation functionality, the base station 132 is configured to provide the optimised timing functionality and the dispatcher workstation 120 is configured to provide the interactive synchronisation functionality. For this purpose, both the mobile user apparatus 110 and the base station 132 comprise a timing unit 11 for combining cell reselection and encryption synchronisation, and both the mobile user apparatus 110 and the dispatcher workstation 120 comprise an interactive unit 12 for interactive encryption synchronisation. The interactive unit 12 may be configured to be a transmitting interactive unit or a receiving interactive unit or both. It should be appreciated that depending on an embodiment, the mobile apparatus 110 may comprise one of the timing unit 11 and the interactive unit 12, the base station 132 may comprise, in addition to or alternatively to the timing unit 11, the interactive unit 12, or none of the units, and the dispatcher workstation 120 may comprise, in addition to or alternatively to the interactive unit 12, the timing unit 11, or none of the units.

In addition, the apparatuses 110, 120, 132 comprise different interface units, such as one or more receiving units (not illustrated in Figure 1) for receiving different inputs, control information, requests and responses, for example, over the TETRA network, and one or more sending units (not illustrated in Figure 1) for sending different outputs, control information, responses and requests, for example, over the TETRA network. The receiving unit and the transmitting unit each provide an interface in the apparatus, the interface including a transmitter and/or a receiver or a corresponding means for receiving and/or transmitting information, and performing necessary functions so that content, control information, etc. can be received and/or transmitted. The receiving and sending units may comprise a set of antennas, the number of which is not limited to any particular number.

Further, the apparatuses comprise memory (not illustrated in Figure 1), and they may comprise units for encryption/decryption and encryption synchronisation (not illustrated in Figure 1). A mobile user apparatus may comprise any type of subscriber identification unit or element that associates the actual terminal equipment of the wireless apparatus to its present user for different authentication purposes.

Each of the units in an apparatus may be a separate unit or integrated to another unit, or the units may be integrated together.

An apparatus implementing functionality or some functionalities according to an embodiment may generally include a processor (not shown in Figure 1), controller, control unit, micro-controller, or the like connected to a memory and to various interfaces of the apparatus. Generally the processor is a central processing unit, but the processor may be an additional operation processor. The timing unit 11 and/or the interactive unit 12 may be configured as a computer or a processor, or a microprocessor, such as a single-chip computer element, or as a chipset, including at least a memory for providing storage area used for arithmetic operation and an operation processor for executing the arithmetic operation. The timing unit 11 and/or the interactive unit 12 may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions of one or more embodiments. An embodiment provides a computer program embodied on any client-readable distribution/data storage medium or memory unit(s) or article(s) of manufacture, comprising program instructions executable by one or more processors/computers, which instructions, when loaded into an apparatus, constitute the timing unit 11 and/or the interactive unit 12. Programs, also called program products, including software routines, program snippets constituting "program libraries", applets and macros, can be stored in any medium, and may be downloaded into an apparatus. The data storage medium or the memory unit may be implemented within the processor/computer or external to the processor/computer, in which case it can be communicatively coupled to the processor/computer via various means as is known in the art.

The memory may be, for example, volatile and/or non-volatile memory, for example EEPROM, ROM, PROM, RAM, DRAM, SRAM, firmware, programmable logic, double floating-gate field effect transistor, etc. and typically store content, data, or the like, and the memory may store the information needed for combining the cell reselection procedure and the encryption synchronisation procedure. Further, the memory may store computer program code such as software applications (for example, for the timing unit 11 and/or the interactive unit 12) or operating systems, information, data, content, or the like for the processor to perform steps associated with the combined cell reselection procedure and encryption synchronisation procedure. The memory may be random access memory, a hard drive, other fixed data memory or storage device or any combination thereof. Further, the memory, or part of it, may be removable memory detachably connected to the apparatus.

Although the apparatuses have been depicted as one unity, different processors, controllers, interfaces and/or memory may be implemented in one or more physical or logical units.

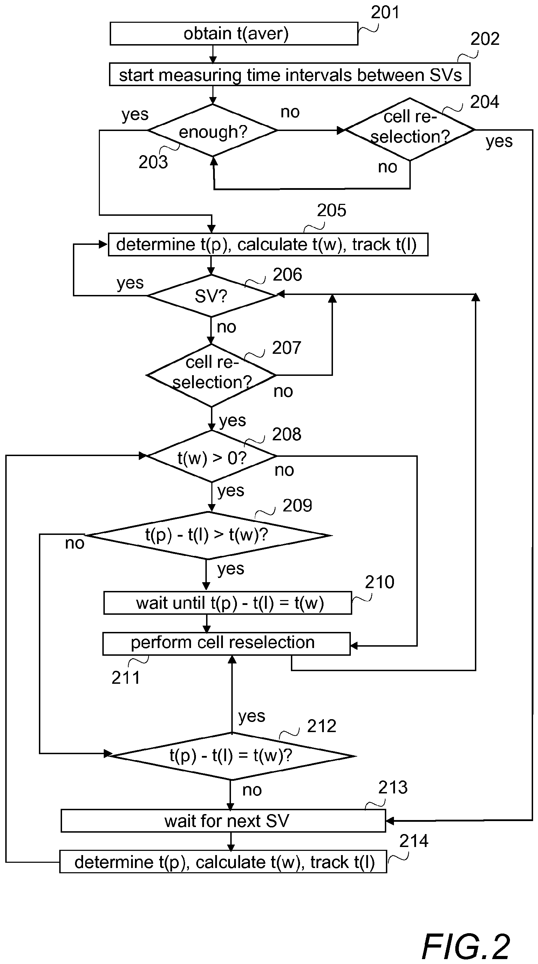

In prior art stream-encrypted communications, a transmitting party is managing the encryption synchronisation. Typically the transmitting party has a predefined synchronisation scheme defining how often synchronisation information is sent to the receiving party, and where the synchronisation information is sent. For example, it may be sent using frame stealing in a user plane traffic path. However, as said above, it bears no significance to the invention how the synchronisation information is sent or managed; it suffices that the synchronisation information is sent in a pre-agreed way, and any suitable way may be used. Below term synchronisation value SV is used for encryption synchronisation information transmitted to the receiving party. Further, with the examples of Figures 2 to 6 it is assumed, for the sake of clarity, that no forced cell reselection happens. However, it should be appreciated that such a forced cell reselection may be performed without trying to optimise the timing of cell reselection and encryption synchronisation.

TETRA system supports both air interface encryption service and an end-to-end encryption service, which are separate functions; information that has already been encrypted by the end-to-end service may be encrypted again by the air interface. The below described examples may be used for only to one of the encryption services, or for both of them. In the latter case, the services may use the same implementation or different implementations.

Figure 2 is a flow chart illustrating an exemplary functionality of a receiving party (an apparatus) configured to optimise the time when to perform a cell reselection after the cell reselection is triggered. More precisely, it describes an exemplary functionality of the timing unit. In the example, the receiving apparatus tries to forecast when synchronisation information will be next time received, and to use that information when cell reselection criteria are met to decide a proper time to trigger the actual cell reselection.

Figure 2 starts, when the apparatus obtains in step 201 information on what is the average time t(aver) required by a cell reselection procedure. The apparatus may have this information stored in its memory as a preconfigured system parameter, or the apparatus may be configured to monitor a time taken by a cell reselection whenever it performs a cell reselection, collect information on these times to calculate an average time, or it may be obtained from the network side. This obtaining may be performed in response to the apparatus answering to a connection establishment request, such as an incoming call signalling, or in response to receiving a first encryption synchronisation value SV, or in response to the apparatus registering to a network, like performing initial cell selection. It should be appreciated that the average time may be any measure of the central tendency in mathematics, like arithmetic mean, harmonic mean, geometric mean, mode (frequently occurring time), median (middle value), normalized mean, etc.

Then measuring a time interval between two consecutive encryption synchronisation values is started in step 202. The interval time measuring is performed as a background process. In the example, the apparatus do not process this information until it either has enough time interval information (step 203), or a cell reselection is triggered (step 204).

It depends on settings, when the apparatus determines that it has enough time interval information. Two consecutive SVs defining one time interval may be enough, but other criteria may be used as well, there are no limitations. When the apparatus has enough information, the apparatus determines in step 205, using the time interval(s) between consecutive encryption synchronisation information, a time period t(p) indicating a predicted time to receive the next encryption synchronisation value SV. Depending on implementation the time period may be determined by taking into account a certain number of previous time intervals, the certain number being two or more, or just to use the previous measured time interval. When two or more previous time intervals are taken into account, a dispersion function, like a deviation function, may be used to take into account possible variations in the time intervals, and to ignore occasional changes but to react to actual changes. For example, due to air interface conditions, an SV may be occasionally missed, and at the beginning of a call, SVs may be sent more often than later on. Further, in step 205 a waiting time t(w) is calculated and a lapsed time t(l) is tracked. The waiting time t(w) is calculated by reducing from the time period t(p) the average time for cell reselection procedure t(aver). Depending on an implementation, a so called safety marginal may or may not also be reduced from the time period. The tracked lapsed time t(l) is the time that has lapsed from the latest reception of the encryption synchronisation value SV.

Meanwhile, the apparatus monitors, whether or not it receives a new encryption synchronisation value SV (step 206) or whether or not a cell reselection process is triggered (step 207).

The process proceeds back to step 205, if a next encryption synchronisation value SV is received in step 206.

If a cell reselection is triggered (step 207), it is checked in step 208, whether or not the determined waiting time t(w) is bigger than zero. If it is not, in the illustrated example, the process proceeds to step 211 to perform the cell reselection. Although not illustrated in Figure 2, the apparatus may mute the speakers so that the user does not hear anything, like noise, when the apparatus has been registered to the new cell, and after encryption synchronisation is performed in the new cell, turn the speakers again on. After that the process continues to step 206 to monitor whether or not it receives a new encryption synchronisation value SV.

If the determined waiting time t(w) is bigger than zero, it is checked in step 209, whether there is more than the waiting time t(w) left after the encryption synchronisation value SV was last time received. In other words, it is checked, whether a time obtained by subtracting the tracked lapsed time t(l) from the determined time period t(p) is bigger than the waiting time t(w).

If there is more than the waiting time t(w) left, it is waited (step 210) until there is the waiting time left. In other words, it is waited until the time obtained by subtracting the tracked lapsed time t(l) from the determined time period t(p) is the waiting time t(w). Then in step 211 the cell reselection is performed and encryption synchronisation will happen in practise immediately after the cell reselection, if the SV is received at the time it is supposed to be received (i.e. when it is forecast to be received) and the cell reselection happens within the average time, or if the safety marginal is used, within a time including the average time and the safety marginal. By using the safety marginal when calculating the waiting time, the process becomes more robust against cell reselection procedures lasting longer than the average time. The safety marginal may depend on variance of the average time, for example. Hence, after the cell reselection is performed, the exemplary process continues from step 211 to step 206 to monitor whether or not it receives a new encryption synchronisation value SV.

If in step 209 it is detected that there is not more than the waiting time t(w) left after the encryption synchronisation value SV was last time received, it is checked in step 212, whether or not there is exactly (or only a little bit more than) the waiting time t(w) left. In other words, it is checked, whether a time obtained by subtracting the tracked lapsed time t(l) from the determined time period t(p) equals to the waiting time t(w). If there is exactly (or only a little bit more than) the waiting time left, the process proceeds directly to step 211 to perform the cell reselection.

If in step 212, it is detected, that there is less than the waiting time t(w) left, the apparatus waits in step 213 until next encryption synchronisation value SV is received, determines in step 214 the time period t(p), calculates the waiting time t(w), and starts to track the time t(l) that has lapsed from the reception of the encryption synchronisation value SV. Then the process proceeds to step 208 to check, whether or not the determined waiting time t(w) is bigger than zero. It should be appreciated that in another implementation, after the next encryption synchronisation value SV is received in step 213, the process proceeds to step 211 to perform the cell reselection.

The apparatus also proceeds to step 213 to wait for next SV from step 204, if the cell reselection is triggered (step 204) before there is enough information (step 203).

The above example tries to minimize the mute time to be very close to the cell reselection time. In another example, utilizing the same information as the example of Figure 2, if in step 209 it is detected that there is more than the waiting time t(w) left, the apparatus performs the cell reselection and resynchronizes when it receives synchronisation value SV in the new cell, otherwise the apparatus proceeds to step 213 to wait until next encryption synchronisation value SV is received, and only after that triggers the cell reselection. This example utilizes the time period determined in step 205 for the cell reselection, and has a longer safety marginal for the cell reselection but the mute/noise time equals then to the time period.

In both examples, the mobile apparatus deducts an optimal time to make cell reselection based on encryption system synchronisation scheme. By this way it synchronises its cell reselection to encryption synchronisation. For example, if time period determined in step 205 is 1 SV/second, average cell reselection time t(aver) is about 700 milliseconds, the synchronisation waiting time t(w) is 300 milliseconds (and no safety marginal is used), if the cell reselection is performed after SV is received, the synchronisation information in the new cell is waited approximately 300 milliseconds, and the mute time is at most 1 second. If the cell reselection is performed after about 300 milliseconds has lapsed from the reception of SV, the cell reselection should be performed so that the synchronisation information in the new cell is received almost without any waiting time, and the mute time is about the same as the average cell reselection time. If no optimal time is deduced, i.e. without the above described optimised timing, the waiting time could be in case the receiving apparatus arrives to the new cell just after SV has been transmitted 1 second, and the mute time 1.7 seconds.

In a further example, in which the safety marginal is determined based on the changes of the time the cell reselection actually takes, the apparatus may be configured to determine in step 205 also the safety marginal.

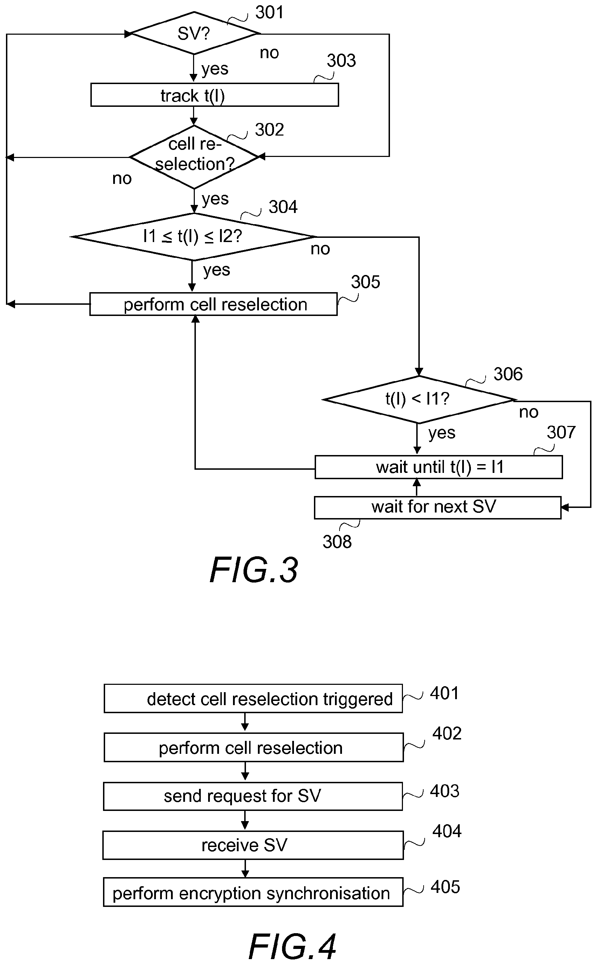

Figure 3 is a flow chart illustrating an exemplary functionality of a receiving party (an apparatus) configured to optimise the time when to perform a cell reselection after the cell reselection is triggered. More precisely, it describes an exemplary functionality of the timing unit. In the above examples, dynamic determination of the time period between encryption synchronisation values SVs was used. However, instead of the dynamic determination, the time period may be a preconfigured parameter (even with the above examples), as is the case with the example illustrated in Figure 3. Further, in the example illustrated in Figure 3, it is assumed that the average time t(aver) the cell reselection procedure takes is also a preconfigured parameter. However, it should be appreciated that any of the above described ways to determine the average time may be used instead.

Referring to Figure 3, the apparatus monitors, whether it receives an encryption synchronisation value SV (step 301) or a cell reselection is triggered (step 302).

If a new encryption synchronisation value SV is received, the apparatus starts in step 303 to track lapsed time t(l) from the reception of the encryption synchronisation value SV, and meanwhile continues the monitoring. The tracking is done as a background process.

If the cell reselection is triggered (step 302), the apparatus checks in step 304, whether the lapsed time t(l) is within preconfigured limits l1 and l2. The limits are preconfigured to control that the cell reselection takes place at an optimised time. When the values are determined, the time period t(p) between encryption synchronisation values SVs and the average time t(aver) the cell reselection procedure takes, are taken into account. The lower limit l1 determines how much time has to be waited after the reception of SV before the cell reselection is performed, and hence it has to be equal to or greater than zero, and less than the upper limit l2. The upper limit l2 determines a time limit after which a next SV has to be waited for before performing the cell reselection. Hence, it can be equal to or less than t(p)-t(aver). In other words, using the above values if t(aver) is 700 ms and t(p) is 1000 ms, l2 can be 300 ms or less and l1 can be 0 or more up to but not including 300 ms. It is advisable but not necessary to use a safety marginal for the upper limit l2 and not to perform the cell reselection immediately after reception of SV. For example, l1 may be preset to 150 ms, and l2 to 250 ms. It should be appreciated that values of l1 and/or l2 can be dynamically updated, if t(p) and/or t(aver) is determined dynamically.

If the lapsed time is within the limits (step 304), the cell reselection is performed in step 305, and then the process continues to step 301 to monitor whether SV is received.

If the lapsed time is not within the limits (step 304), it is checked in step 306, whether or not the lapsed time is smaller than the lower limit 11. If it is, it is waited in step 307 until the lapsed time equals to the lower limit 11, and then the cell reselection is performed.

If the lapsed time is not smaller than the lower limit l1 (step 304), it is bigger than the upper limit (since it was not within the limits), and therefore the next encryption synchronisation value SV is waited for in step 308 and then it is waited in step 307 until the lapsed time equals to the lower limit l1.

It should be appreciated that if the lower limit l1 is zero, steps 306 and 307 are skipped over.

Also herein the apparatus may be configured to mute the audio when the cell reselection is performed and turn the speakers on, when it is again encryption synchronised.

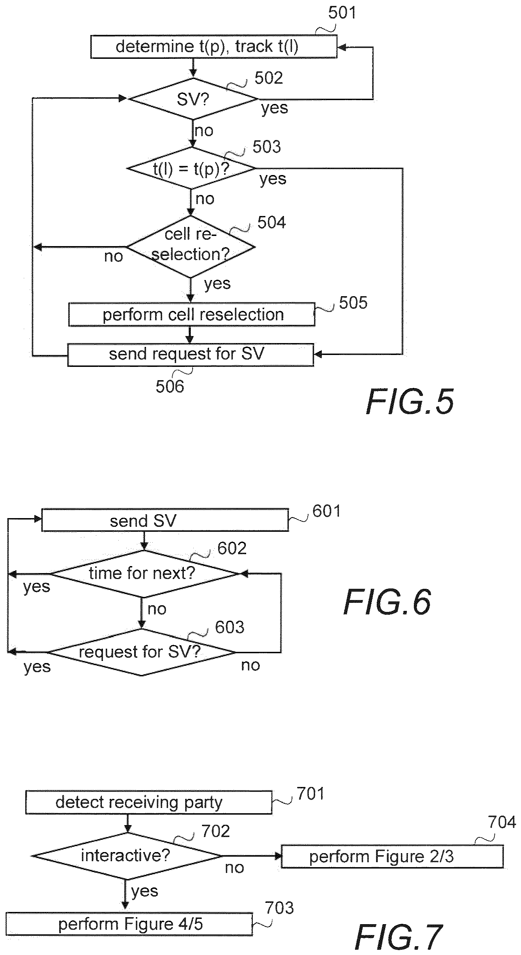

Figures 4, 5 and 6 illustrate exemplary functionalities when an interactive encryption synchronisation is implemented. More precisely, Figures 4 and 5 are flow charts illustrating exemplary functionalities of a receiving party (an apparatus) configured to request encryption synchronisation value and Figure 6 is a flow chart illustrating an exemplary functionality of a corresponding transmitting party configured to response to the request. In other words, Figures 4 and 5 illustrate exemplary functionalities of the receiving interactive unit, and Figure 6 illustrates exemplary functionality of the transmitting interactive unit. The interactive synchronisation may be implemented, if the receiving and transmitting apparatus comprise at least corresponding units (an apparatus may comprise also an interactive unit configured to perform receiving functionality and the transmitting functionality), and if the receiving party (apparatus) knows the address of the transmitting party (apparatus) so that a request to the transmitting party may be send. In other words, they need to be able to exchange information. Basically this means a point-to-point connection. Hence, the interactive synchronisation may be used when key-streamed end-to-end encryption is used between a sending apparatus and one or more receiving apparatuses but it may be used as well in a direct mode and over the air link to SwMI, if the addresses are known.

Referring to Figure 4, when the receiving apparatus detects in step 401, that a cell reselection is triggered, it performs in step 402 the cell reselection and then sends in step 403 a request for encryption synchronisation value SV to the transmitting party. When the encryption synchronisation value SV is received in step 404, the receiving party performs in step 405 the encryption synchronisation and can again receive properly. Although not illustrated in Figure 4, the apparatus may mute the speakers so that the user does not hear anything, like noise, when the apparatus has been registered to the new cell (i.e. during step 402), and after step 405 turn the speakers again on.

Referring to Figure 5, the time period t(p) between encryption synchronisation values is determined and the lapsed time t(l) that has lapsed from the reception of the encryption synchronisation value SV is tracked in step 501. Any of the ways describe above in connection with Figures 2 and 3 may be used for determining the time period.

While the time is tracked, the apparatus monitors, whether an encryption synchronisation value SV is received (step 502), or whether the lapsed time t(l) equals to the time period t(p) (step 503), or whether a cell reselection is triggered (504).

If an encryption synchronisation value SV is received (step 502), the process proceeds back to step 501 to start tracking the time again, and if dynamically adjustable time period is used, to determine it.

If a cell reselection is triggered (step 504), the apparatus performs in step 505 the cell reselection and then sends in step 506 a request for encryption synchronisation value SV to the transmitting party, and continues to step 502 to monitor, whether SV is received.

If the lapsed time t(l) equals to the time period t(p) (step 503), the encryption synchronisation value is not received when it was predicted, and the encryption synchronisation may be not valid anymore. Therefore the apparatus sends in step 506 a request for encryption synchronisation value SV to the transmitting party, and continues to step 502 to monitor reception of it.

It should be appreciated that although not described in Figure 5, no new requests for SV are sent while such a request is pending but a cell reselection may be performed, and that when the encryption synchronisation value SV is received, the encryption synchronisations is performed.

Thanks to detecting a missed SV (step 503), the interactivity is used also for ensuring encryption synchronisation even when no cell reselection happens.

Referring to Figure 6, the transmitting party (apparatus) sends in step 601 the encryption synchronisation value SV to the receiving party according to its synchronisation scheme and resets a time (a resending timer, for example) for next encryption synchronisation value SV. Then the apparatus monitors, whether or not it is time to send the next encryption synchronisation value SV (step 602) or whether or not a request for encryption synchronisation value SV is received (step 603). In response to the request being received while the time for next SV has not lapsed, the apparatus proceeds to step 601 to send the encryption synchronisation value. The apparatus proceeds also to step 601 to send the encryption synchronisation value in response to the time for next SV being lapsed. Hence, the synchronisation value is sent when the receiving party needs it, and afterwards the transmitting party sends SVs using the same time period, i.e. using the same synchronisation scheme defining how often synchronisation information is sent to the receiving party scheme as it previously used, unless there are other reasons to change the time period. However, it should be appreciated that in another implementation, the apparatus may be configured not to reset the time for next SV when SV is sent in a response to the specific request.

Figure 7 is a flow chart illustrating an exemplary functionality of a receiving party (an apparatus) configured to implement both of the above described mechanisms to minimize the mute time.

Referring to Figure 7, the apparatus detects in step 701 that it is a receiving party in an interactive encryption synchronisation, and checks in step 702, whether or not the communications enables interactive encryption synchronisation. If yes, the apparatus performs in step 703 the functionality of Figure 4 or Figure 5. If not, the apparatus performs in step 704 the functionality of Figure 2 or 3, or one of the above described alternatives for the functionality in which the starting time of the cell reselection procedure is synchronised with an predicted time for receiving encryption synchronisation information.

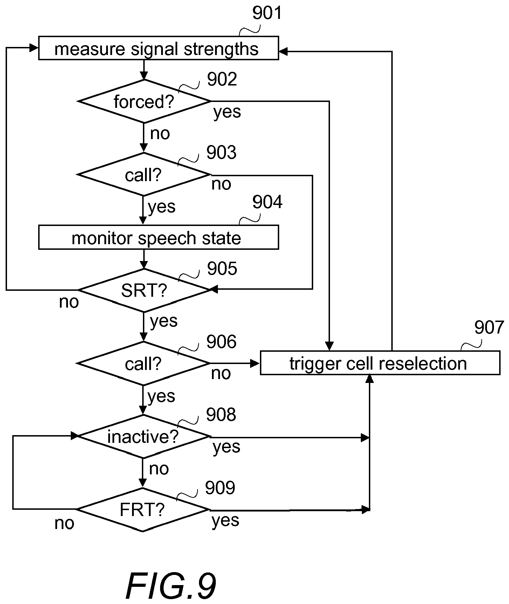

The above description has been silent on what triggers a cell reselection procedure. As one skilled in the art is familiar with, a mobile apparatus performs a cell reselection in response to predefined criteria being met between serving and neighbour cells. It should be appreciated that any criteria and mechanism to determine whether or not to trigger a cell reselection process may be used with the above examples. Examples of such a mechanism and criteria relating to TETRA communications are illustrated below with Figures 8 and 9, without restricting the above described combining of cell reselection and encryption synchronisation to those examples.

According to TETRA standard, two different thresholds are given for determining whether or not a cell reselection is to be performed, and the decision which one is used, depends on whether or not the mobile apparatus is in idle state, i.e. not engaged to a communication, like a call. Hence, TETRA standard delays the cell reselection to take place as later as possible when there is an on-going call to decrease number of cell reselections but ensures that in idle state the cell reselection is performed when the serving cell is not anymore the best cell.

Referring to Figure 8, C1 and C2 illustrate how signal strengths of current cell and a neighbouring cell towards which the mobile apparatus is moving behave, C1 illustrating the signal strength of the current serving cell and C2 illustrating the signal strength of the neighbouring cell, the signal strengths being received by monitoring corresponding broadcast. If the apparatus is in the idle mode, and the signal strength of the serving cell falls below a slow reselection threshold, and the neighbouring cell's signal strength exceeds the signal strength of the serving cell by the value defined in the radio network parameter cell reselection parameters, slow reselect hysteresis A1 for a period of 5 seconds, a cell reselection is triggered in location denoted by A in Figure 8. If the apparatus is not in the idle mode, it is waited until the signal strength of the serving cell falls below a Fast Reselection Threshold (FRT), and the neighbouring cell's signal strength exceeds the signal strength of the serving cell by a value defined in the radio network parameter cell reselection parameters, fast reselect hysteresis B1 for a period of 5 seconds, a cell reselection is triggered in location denoted by B in Figure 8. This may trigger one of the optimised timing (i.e. combined cell reselection and encryption synchronisation) described above. However, in another embodiment, thanks to optimising the mute time, point A may be used also when there is an on-going call, or point B may be moved towards point A.

Figure 8 illustrates a further reselection threshold Forced optimised Fast Reselection Threshold (FoRT), which may be used to force the mobile apparatus to perform the cell reselection in order to avoid radio link failure and maintain an on-going call, even if it has to be muted a little bit longer than the original intention is. The situation may occur when the starting time of the cell reselection procedure is synchronised with a predicted time for receiving encryption synchronisation information, if the signal strength C1 decreases too much during the synchronisation.

Figure 9 illustrates an enhanced mechanism for determining when to trigger the cell reselection. A further assumption made here, is that the forced cell reselection threshold is implemented. However, that needs not to be the case. It should be appreciated that if the forced cell reselection threshold is not implemented corresponding steps and functions are skipped over.

Referring to Figure 9, the mobile apparatus measures in step 901 the signal strengths of the serving cell and neighbouring cells, and checks in step 902 whether or not a forced cell reselection is triggered. If not, the mobile apparatus checks, if there is an on-going call (step 903), and if there is an on-going call, the mobile apparatus monitors, in step 904 a speech state of the call. The speech state may be determined based on call signalling or activity of a voice codec in the mobile apparatus. The mobile apparatus further monitors in step 905, whether or not the cell reselection criteria for the idle state, i.e. the Slow Reselection Threshold criteria (SRT), are met. If not, the steps 901-905 are repeated.

If the cell reselection criteria for the idle state are met, the mobile apparatus checks in step 906 whether or not there is an on-going call. If not, the cell reselection procedure is triggered in step 907. After the cell reselection procedure is performed (not illustrated in Figure 9), the mobile apparatus measures in point 901 the signal strengths.

If there is an on-going call (step 906), the mobile apparatus checks in step 908 whether the speech status of the call is inactive. If the speech status is inactive, no active speech is transmitted or received, and the cell reselection procedure is triggered in step 907. In an implementation, when the process proceeds step 907 from step 908, one of the procedures of the optimised timing and interactive synchronisation described above in connection with Figures 2 to 7 is triggered, without restricting the example to such an implementation.

If the speech status is active (step 908), the mobile apparatus monitors in step 909, whether the cell reselection criteria for the call state, i.e. the fast reselection threshold criteria (FRT), are met, or whether the speech status remains active (step 908).

If the fast reselection threshold criteria (FRT) are met, the cell reselection procedure is triggered in step 907. In an implementation, when the process proceeds to step 907 from step 909, one of the procedures of the combined cell reselection and encryption synchronisation described above with Figures 2 to 7 is triggered, without restricting the example to such an implementation.

If a speech inactivity notification is received, i.e. the speech status is changed to inactive (step 908), the cell reselection procedure is triggered in step 907, as is described above.

If at any time the forced cell criteria are met (step 902), the process triggers in step 907 the cell reselection procedure and performs it immediately in order to maintain network connection.

With the example of Figure 9, the timing of triggering the cell reselection when there is an on-going call may be extended so that inactive periods of the call between points A and B in Figure 8 may be utilised for cell reselection so that even in cases where none of the above in connection with Figures 2 to 7 described combined cell reselection and encryption synchronisation is implemented, it may be that no actual information is missed. For example, according to a public safety generic communication profile for group call there may be 5 seconds active speech and 3-4 seconds of inactive time before the next speech starts, and as said above, the maximum mute time in a TETRA system not combining cell reselection and encryption synchronisation is 1.7 seconds.

Another advantage provided by the enhanced cell reselection method of Figure 9 is that it helps to facilitate selecting at a proper time a proper cell in a network in which the network capacity is increased by having smaller cells and lower re-use distance than what is required by the TETRA standard.

Although in the above the examples are described with the cell reselection, it should be appreciated that the above procedure may be performed to recover an out-of-coverage situation as well.

The steps, messages and related functions described above with Figures 2-7 and 9 are in no absolute chronological order, and some of the steps may be performed simultaneously or in an order differing from the given one. Other functions can also be executed between the steps or within the steps and other messages sent between the illustrated messages. Some of the steps or part of the steps can also be left out or replaced by a corresponding step or part of the step. Some of the steps may be performed continuously while the others are performed during stream-encrypted communication. For example, when dynamic determination of the average time for cell reselection is used, the average time may be monitored while the apparatus is attached to the network, although other steps are performed while the apparatus is engaged with a stream-encrypted communication, or while the apparatus is engaged with a stream-encrypted voice call but not while the apparatus is engaged with a stream-encrypted data communication, either from the very beginning of the communication/call, or some/all of them only after the time interval between two consecutive SVs is bigger than the average time (in the beginning of a connection SVs may be sent more often). Further, some of the steps may be performed communication-specifically, while others, like determining the average time, are not performed communication-specifically.

It will be obvious to a person skilled in the art that, as technology advances, the inventive concept can be implemented in various ways. The invention and its embodiments are not limited to the examples described above but may vary within the scope of the claims.

## Claims

1. A method comprising:
determining (205, 214), by a decrypting receiving apparatus, a time period indicating a predicted time between receptions of latest and next encryption synchronisation information;
determining (201), by the decrypting receiving apparatus, a first time, which is an average time for performing a cell reselection procedure;
repeating (205, 303), by the decrypting receiving apparatus, receiving the encryption synchronisation information and tracking a second time that has lapsed after the latest encryption synchronisation information;
monitoring (207, 302), by the decrypting receiving apparatus, whether a cell reselection is triggered;
if the cell reselection is triggered, the method further comprises:
determining, by the decrypting receiving apparatus, on the basis of the time period, the first time and the second time, a starting time of the cell reselection; and
starting performing (211, 305) the cell reselection at the starting time.

2. A method as claimed in claim 1, further comprising:
calculating (205) a waiting time by subtracting the first time from the time period;
calculating (209), in response to the cell reselection being triggered, a third time by subtracting from the time period the second time;
comparing (209, 212) the waiting time to the third time; and
if the third time is less than the waiting time, waiting (213) at least until next reception of synchronisation information before starting performing the cell reselection.

3. A method as claimed in claim 2, further comprising, if the third time is not less than the waiting time:
starting performing the cell reselection when one or more of the following conditions is fulfilled: the waiting time is equal to the third time (212), the waiting time is a predetermined amount smaller than the third time, the waiting time is smaller than or equal to zero (208), and when the third time is zero.

4. A method as claimed in claim 1, further comprising, if the time period is bigger than the first time:
calculating, in response to the cell reselection being triggered, a third time by subtracting from the time period the second time;
starting performing the cell reselection when the third time is within a predetermined range, wherein the lower limit of the range is not less than zero and the upper limit of the range is not bigger than a result obtained by subtracting the first time from the time period; and
if the third time is not within the predetermined range, waiting at least until next reception of synchronisation information before starting performing the cell reselection.

5. A method as claimed in any of the preceding claims, further comprising determining dynamically at least one of the time period and the first time and/or determining at least one of the time period and the first time by obtaining a preconfigured or preset value.

6. A method comprising:
receiving (502), by a decrypting receiving apparatus, encryption synchronisation information;
detecting (401, 504), by the decrypting receiving apparatus, that a cell reselection for the apparatus is triggered;
performing (402, 505), by the decrypting receiving apparatus, the cell reselection; and
sending (403, 506), by the decrypting receiving apparatus, in response to a performed cell reselection, a request for encryption synchronisation information.

7. A method as claimed in claim 6, further comprising:
monitoring (502), by the decrypting receiving apparatus, a time interval between receptions of encryption synchronisation information; and
if a time corresponding to the time interval has lapsed (503) without reception of encryption synchronisation information, sending (506), by the decrypting receiving apparatus, the request for encryption synchronisation information.

8. A method as claimed in claim 1 to 5 or 6 to 7, further comprising:
determining (702), by the decrypting receiving apparatus, whether a connection for which encryption synchronisation is received is a point-to-point or end-to-end connection;
if is the connection is an end-to-end connection, performing (703), by the decrypting receiving apparatus, the method as claimed in claim 6 or 7,
otherwise performing (704), by the decrypting receiving apparatus, a method as claimed in any of claims 1 to 5.

9. A method as claimed in any of preceding claims, further comprising:
measuring (901), by the decrypting receiving apparatus, signal strengths of two or more cells;
monitoring (904), by the decrypting receiving apparatus, a speech status of a call for which the encryption synchronisation information is received;
triggering (907), by the decrypting receiving apparatus, a first cell reselection procedure in response to the measured signal strengths fulfilling first criteria for cell reselection and the speech status being inactive; and
triggering (907), by the decrypting receiving apparatus, a second cell reselection procedure in response to the measured signal strengths fulfilling second criteria for cell reselection regardless of the speech status.

10. A method as claimed in claim 9, wherein a method as claimed in any of claims 1 to 8 is performed, by the decrypting receiving apparatus, only in response to the second cell reselection procedure being triggered.

11. A method comprising:
sending (601), by an apparatus, encryption synchronisation information to a decrypting receiving apparatus each time a predetermined time has lapsed from the previous sending;
receiving (603), by the apparatus, a request for encryption synchronisation information from the decrypting receiving apparatus, in response to a performed cell reselection by the decrypting receiving apparatus;
sending (601), by the apparatus, in response to the request, the encryption synchronisation information to the decrypting receiving apparatus.

12. A method as claimed in claim 11, further comprising ignoring the sending of the encryption synchronisation information in response to the request, when the predetermined time has lapsed causing sending the encryption synchronisation information.

13. A computer program product comprising computer program code configured to perform a method as claimed in any one of claims 1 to 12 when executed on an apparatus.

14. An apparatus (110, 120, 132) configured to support stream-encrypted communication, the apparatus comprising means (11, 12) performing a method as claimed in any one of claims 1 to 10.

15. A system configured to support stream-encrypted communication, comprising:
an apparatus comprising means performing a method as claimed in any one of claims 6-10; and
an apparatus comprising means performing a method as claimed in any one of claims 11-12.

16. An apparatus (110, 132) as claimed in claim 14, wherein the apparatus is a mobile radio apparatus.

## Patentansprüche

1. Verfahren, das umfasst:
Bestimmen (205, 214) einer Zeitperiode, die eine vorhergesagte Zeit zwischen Empfängen neuester und nächster Verschlüsselungssynchronisationsinformationen angibt, durch eine entschlüsselnde empfangende Vorrichtung,
Bestimmen (201) einer ersten Zeit, die eine Durchschnittszeit zum Durchführen einer Zellenneuauswahlprozedur ist, durch die entschlüsselnde empfangende Vorrichtung;
Wiederholen (205, 303) des Empfangens der Verschlüsselungssynchronisationsinformationen und Verfolgen einer zweiten Zeit, die nach den neuesten Verschlüsselungssynchronisationsinformationen verstrichen ist, durch die entschlüsselnde empfangende Vorrichtung;
Überwachen (207, 302), ob eine Zellenneuauswahl ausgelöst wird, durch die entschlüsselnde empfangende Vorrichtung;
wobei, wenn die Zellenneuauswahl ausgelöst wird, das Verfahren ferner umfasst:
Bestimmen einer Startzeit der Zellenneuauswahl basierend auf der Zeitperiode, der ersten Zeit und der zweiten Zeit, durch die entschlüsselnde empfangende Vorrichtung; und
Starten des Durchführens (211, 305) der Zellenneuauswahl an der Startzeit.

2. Verfahren nach Anspruch 1, das ferner umfasst:
Berechnen (205) einer Wartezeit durch Subtrahieren der ersten Zeit von der Zeitperiode;
als Reaktion auf das Auslösen der Zellenneuauswahl, Berechnen (209) einer dritten Zeit durch Subtrahieren der zweiten Zeit von der Zeitperiode;
Vergleichen (209, 212) der Wartezeit mit der dritten Zeit; und
wenn die dritte Zeit kürzer ist als die Wartezeit, Warten (213) zumindest bis zum nächsten Empfang von Synchronisationsinformationen vor dem Beginn des Durchführens der Zellenneuauswahl.

3. Verfahren nach Anspruch 2, das ferner, wenn die dritte Zeit nicht kürzer als die Wartezeit ist, umfasst:
Starten des Durchführens der Zellenneuauswahl, wenn eine oder mehrere von den folgenden Bedingungen erfüllt ist/sind: die Wartezeit ist gleich der dritten Zeit (212), die Wartezeit ist ein vorbestimmter Betrag, der kleiner ist als die dritte Zeit, die Wartezeit ist kürzer oder gleich Null (208), und wenn die dritte Zeit Null ist.

4. Verfahren nach Anspruch 1, das ferner, wenn die Zeitperiode länger als die erste Zeit ist, umfasst:
als Reaktion auf das Auslösen der Zellenneuauswahl, Berechnen einer dritten Zeit durch Subtrahieren der zweiten Zeit von der Zeitperiode;
Starten des Durchführens der Zellenneuauswahl, wenn die dritte Zeit innerhalb eines vorbestimmten Bereichs liegt, wobei die untere Grenze des Bereichs nicht kleiner als Null ist und die obere Grenze des Bereichs nicht größer als ein Ergebnis ist, das durch Subtrahieren der ersten Zeit von der Zeitperiode erhalten wird; und
wenn die dritte Zeit nicht innerhalb des vorbestimmten Bereichs liegt, Warten mindestens bis zum nächsten Empfang von Synchronisationsinformationen vor dem Starten des Durchführens der Zellenneuauswahl.

5. Verfahren nach einem der vorhergehenden Ansprüche, das ferner das dynamische Bestimmen von mindestens einem von der Zeitperiode und der ersten Zeit und/oder Bestimmen von mindestens einem von der Zeitperiode und der ersten Zeit durch Erhalten eines vorkonfigurierten oder voreingestellten Werts umfasst.

6. Verfahren, das umfasst:
Empfangen (502) von Verschlüsselungssynchronisationsinformationen durch eine entschlüsselnde empfangende Vorrichtung;
Feststellen (401, 504), dass eine Zellenneuauswahl für die Vorrichtung ausgelöst wird, durch die entschlüsselnde empfangende Vorrichtung;
Durchführen (402, 505) der Zellenneuauswahl durch die entschlüsselnde empfangende Vorrichtung; und
Senden (403, 506) einer Anforderung für Verschlüsselungssynchronisationsinformationen als Reaktion auf eine durchgeführte Zellenneuauswahl, durch die entschlüsselnde empfangende Vorrichtung.

7. Verfahren nach Anspruch 6, das ferner umfasst:
Überwachen (502) eines Zeitintervalls zwischen Empfängen von Verschlüsselungssynchronisationsinformationen durch die entschlüsselnde empfangende Vorrichtung; und
wenn eine Zeit, die dem Zeitintervall entspricht, ohne Empfang von Verschlüsselungssynchronisationsinformationen verstrichen ist (503), Senden (506) der Anforderung für Verschlüsselungssynchronisationsinformationen durch die entschlüsselnde empfangende Vorrichtung.

8. Verfahren nach Anspruch 1 bis 5 oder 6 bis 7, das ferner umfasst:
Bestimmen (702), ob eine Verbindung, für die Verschlüsselungssynchronisation empfangen wird, eine Punkt-zu-Punkt- oder End-zu-End-Verbindung ist, durch die entschlüsselnde empfangende Vorrichtung;
wenn die Verbindung eine End-zu-End-Verbindung ist, Durchführen (703) des Verfahrens nach Anspruch 6 oder 7 durch die entschlüsselnde empfangende Vorrichtung,
anderenfalls Durchführen (704) eines Verfahrens nach einem der Ansprüche 1 bis 5 durch die entschlüsselnde empfangende Vorrichtung.

9. Verfahren nach einem der vorhergehenden Ansprüche, das ferner umfasst:
Messen (901) von Signalstärken von zwei oder mehr Zellen durch die entschlüsselnde empfangende Vorrichtung;
Überwachen (904) eines Sprachzustands eines Anrufs, für den die Verschlüsselungssynchronisationsinformationen empfangen werden, durch die entschlüsselnde empfangende Vorrichtung;
Auslösen (907) einer ersten Zellenneuauswahlprozedur als Reaktion darauf, dass die gemessenen Signalstärken erste Kriterien zur Zellenneuauswahl erfüllen und der Sprachzustand inaktiv ist, durch die verschlüsselnde empfangende Vorrichtung; und
Auslösen (907) einer zweiten Zelleneuauswahlprozedur als Reaktion darauf, dass die gemessenen Signalstärken zweite Kriterien zur Zellenneuauswahl erfüllen, unabhängig von dem Sprachzustand, durch die verschlüsselnde empfangende Vorrichtung.

10. Verfahren nach Anspruch 9, wobei ein Verfahren nach einem der Ansprüche 1 bis 8 durch die entschlüsselnde empfangende Vorrichtung nur als Reaktion auf das Auslösen der zweiten Zellenneuauswahlprozedur durchgeführt wird.

11. Verfahren, das umfasst:
Senden (601) von Verschlüsselungssynchronisationsinformationen durch eine Vorrichtung an eine entschlüsselnde empfangende Vorrichtung jedes Mal, wenn eine vorbestimmte Zeit seit dem vorhergehenden Senden verstrichen ist;
Empfangen (603) einer Anforderung für Verschlüsselungssynchronisationsinformationen von der entschlüsselnden empfangenden Vorrichtung durch die Vorrichtung, als Reaktion auf eine durch die entschlüsselnde empfangende Vorrichtung durchgeführte Zellenneuauswahl;
Senden (601) der Verschlüsselungssynchronisationsinformationen an die entschlüsselnde empfangende Vorrichtung als Reaktion auf die Anforderung, durch die Vorrichtung.

12. Verfahren nach Anspruch 11, das ferner das Ignorieren des Sendens von Verschlüsselungssynchronisationsinformationen als Reaktion auf die Anforderung umfasst, wenn die vorbestimmte Zeit verstrichen ist, wodurch das Senden der Verschlüsselungssynchronisationsinformationen bewirkt wird.

13. Computerprogrammprodukt, das Computerprogrammcode umfasst, der ausgestaltet ist, um ein Verfahren nach einem der Ansprüche 1 bis 12 durchzuführen, wenn er auf einer Vorrichtung ausgeführt wird.

14. Vorrichtung (110, 120, 132), die ausgestaltet ist, um stromverschlüsselte Kommunikation zu unterstützen, wobei die Vorrichtung Mittel (11, 12) umfasst, die ein Verfahren nach einem der Ansprüche 1 bis 10 durchführen.

15. System, das ausgestaltet ist, um stromverschlüsselte Kommunikation zu unterstützen, das umfasst:
eine Vorrichtung, die Mittel umfasst, die ein Verfahren nach einem der Ansprüche 6 bis 10 durchführen; und
eine Vorrichtung, die Mittel umfasst, die ein Verfahren nach einem der Ansprüche 11 und 12 durchführen.

16. Vorrichtung (110, 132) nach Anspruch 14, wobei die Vorrichtung eine mobile Funkvorrichtung ist.

## Revendications

1. Procédé qui comprend :
la détermination (205, 214), par un appareil de réception de déchiffrement, d'une période de temps qui indique un temps prédit entre les réceptions d'informations de synchronisation de chiffrement les plus récentes et suivantes ;
la détermination (201), par l'appareil de réception de déchiffrement, d'un premier temps, qui est un temps moyen pour effectuer une procédure de resélection de cellule ;
la répétition (205, 303), par l'appareil de réception de déchiffrement, de la réception des informations de synchronisation de chiffrement et le suivi d'un deuxième temps qui s'est écoulé après les informations de synchronisation de chiffrement les plus récentes ;
la surveillance (207, 302), par l'appareil de réception de déchiffrement, si une resélection de cellule est déclenchée ;
si la resélection de cellule est déclenchée, le procédé comprend en outre :
la détermination, par l'appareil de réception de déchiffrement, sur la base de la période de temps, du premier temps et du deuxième temps, d'un instant de début de la resélection de cellule ; et
le lancement de l'exécution (211, 305) de la resélection de cellule à l'instant de début.

2. Procédé selon la revendication 1, qui comprend en outre :
le calcul (205) d'un temps d'attente en soustrayant le premier temps de la période de temps ;
le calcul (209), en réponse au redéclenchement de la resélection de cellule, d'un troisième temps en soustrayant, de la période de temps, le deuxième temps ;
la comparaison (209, 212) du temps d'attente au troisième temps ; et
si le troisième temps est inférieur au temps d'attente, l'attente (213) au moins jusqu'à la réception suivante d'informations de synchronisation avant le lancement de l'exécution de la resélection de cellule.

3. Procédé selon la revendication 2, qui comprend en outre, si le troisième temps n'est pas inférieur au temps d'attente :
le lancement de l'exécution de la resélection de cellule lorsque l'une ou plusieurs des conditions suivantes sont satisfaites : le temps d'attente est égal au troisième temps (212), le temps d'attente est inférieur d'une quantité prédéterminée au troisième temps, le temps d'attente est inférieur ou égal à zéro (208), et lorsque le troisième temps est nul.

4. Procédé selon la revendication 1, qui comprend en outre, si la période de temps est plus grande que le premier temps :
le calcul, en réponse au déclenchement de la resélection de cellule, d'un troisième temps en soustrayant, de la période de temps, le deuxième temps ;
le lancement de l'exécution de la resélection de cellule lorsque le troisième temps est dans une plage prédéterminée, dans lequel la limite inférieure de la plage n'est pas inférieure à zéro et la limite supérieure de la plage n'est pas plus grande qu'un résultat obtenu en soustrayant le premier temps de la période de temps ; et
si le troisième temps n'est pas dans la plage prédéterminée, l'attente au moins jusqu'à la réception suivante d'informations de synchronisation avant le lancement de l'exécution de la resélection de cellule.

5. Procédé selon l'une quelconque des revendications précédentes, qui comprend en outre la détermination de manière dynamique d'au moins l'un de la période de temps et du premier temps et/ou la détermination d'au moins l'un de la période de temps et du premier temps en obtenant une valeur préconfigurée ou prédéterminée.

6. Procédé qui comprend :
la réception (502), par un appareil de réception de déchiffrement, d'informations de synchronisation de chiffrement ;
la détection (401, 504), par l'appareil de réception de déchiffrement, qu'une resélection de cellule pour l'appareil est déclenchée ;
l'exécution (402, 505), par l'appareil de réception de déchiffrement, de la resélection de cellule ; et
l'envoi (403, 506), par l'appareil de réception de déchiffrement, en réponse à une resélection de cellule effectuée, d'une demande pour des informations de synchronisation de chiffrement.

7. Procédé selon la revendication 6, qui comprend en outre :
la surveillance (502), par l'appareil de réception de déchiffrement, d'un intervalle de temps entre les réceptions d'informations de synchronisation de chiffrement ; et
si un temps qui correspond à l'intervalle de temps s'est écoulé (503) sans réception d'informations de synchronisation de chiffrement, l'envoi (506), par l'appareil de réception de déchiffrement, de la demande pour des informations de synchronisation de chiffrement.

8. Procédé selon les revendications 1 à 5 ou 6 et 7, qui comprend en outre :
la détermination (702), par l'appareil de réception de déchiffrement, si une connexion pour laquelle une synchronisation de chiffrement est reçue est une connexion de point-à-point ou de bout en bout ;
si la connexion est une connexion de bout en bout, l'exécution (703), par l'appareil de réception de déchiffrement, du procédé selon la revendication 6 ou 7,
autrement l'exécution (704), par l'appareil de réception de déchiffrement, d'un procédé selon l'une quelconque des revendications 1 à 5.

9. Procédé selon l'une quelconque des revendications précédentes, qui comprend en outre :
la mesure (901), par l'appareil de réception de déchiffrement, des intensités de signal de deux cellules ou plus ;
la surveillance (904), par l'appareil de réception de déchiffrement, d'un état de parole d'un appel pour lequel les informations de synchronisation de chiffrement sont reçues ;
le déclenchement (907), par l'appareil de réception de déchiffrement, d'une première procédure de resélection de cellule en réponse au fait que les intensités de signal mesurées satisfont à des premiers critères pour une resélection de cellule et au fait que l'état de parole est inactif ; et
le déclenchement (907), par l'appareil de réception de déchiffrement, d'une deuxième procédure de resélection de cellule en réponse au fait que les intensités de signal mesurées satisfont à des deuxièmes critères pour une resélection de cellule indépendamment de l'état de parole.

10. Procédé selon la revendication 9, dans lequel un procédé selon l'une quelconque des revendications 1 à 8 est effectué, par l'appareil de réception de déchiffrement, uniquement en réponse au déclenchement de la deuxième procédure de resélection de cellule.

11. Procédé qui comprend :
l'envoi (601), par un appareil, d'informations de synchronisation de chiffrement à un appareil de réception de déchiffrement à chaque fois qu'un temps prédéterminé s'est écoulé depuis l'envoi précédent ;
la réception (603), par l'appareil, d'une demande pour des informations de synchronisation de chiffrement en provenance de l'appareil de réception de déchiffrement, en réponse à une resélection de cellule effectuée par l'appareil de réception de déchiffrement ;
l'envoi (601), par l'appareil, en réponse à la demande, des informations de synchronisation de chiffrement à l'appareil de réception de déchiffrement.

12. Procédé selon la revendication 11, qui comprend en outre l'ignorance de l'envoi des informations de synchronisation de chiffrement en réponse à la demande, lorsque le temps prédéterminé s'est écoulé provoquant l'envoi des informations de synchronisation de chiffrement.

13. Produit-programme d'ordinateur qui comprend un code de programme d'ordinateur configuré pour effectuer un procédé selon l'une quelconque des revendications 1 à 12 lorsqu'il est exécuté sur un appareil.

14. Appareil (110, 120, 132) configuré pour prendre en charge une communication chiffrée par flux, dans lequel l'appareil comprend des moyens (11, 12) qui effectuent un procédé selon l'une quelconque des revendications 1 à 10.

15. Système configuré pour prendre en charge une communication chiffrée par flux, qui comprend :
un appareil qui comprend des moyens qui effectuent un procédé selon l'une quelconque des revendications 6 à 10 ; et
un appareil qui comprend des moyens qui effectuent un procédé selon l'une quelconque des revendications 11 et 12.

16. Appareil (110, 132) selon la revendication 14, dans lequel l'appareil est un appareil radio mobile.
